# EUROPEAN PATENT APPLICATION

(11) **EP 2 026 215 A1**
(43) Date of publication of application: **18.02.2009**
(21) Application number: 07114280.6
(22) Date of filing: 13.08.2007
(51) Int. Cl.: G06F 17/00, H04M 3/487, G06Q 30/00

(54) **System and method for facilitating targeted mobile advertisement using pre-loaded ad content**

(71) Applicant: Research In Motion Limited, Waterloo, Ontario N2L 3W8 (CA)
(72) Inventor: Shenfield, Michael, Richmond Hill, Ontario L4C 3S9 (CA); Martin-Cocher, Gaelle, Toronto Ontario M6S 2Y2 (CA)
(74) Representative: Rickard, David John

(57) **Abstract**

A system and method for facilitating targeted mobile advertisement, the system having: a mobile device having: a communication subsystem; at least one application adapted to consume data, create data or consume and create data; a scan engine adapted to scan data consumed or created by the at least one application and to provide an ad trigger alert; and local storage adapted to store advertising content; and a mobile advertising server, the mobile advertising server adapted to receive ad trigger alerts from the scan engine and provide advertising content or advertising content identifiers to the mobile device.

## Description

The present disclosure relates generally to targeted mobile advertisement on a mobile device.

Advertisers in general want to target a particular audience in order to ensure that their advertisements are successful. Preferably the advertisement is directed to the consumer's interests or needs. Further, it is beneficial to a user to receive advertisements which are directed more towards the user's interests as opposed to receiving advertisements which the user has no interest in at all.

Various solutions exist to providing targeted advertising. For example, the Google™ gmail application scans the contents of emails and provides the user with sponsored links that are related to the topic of the email.

In another example, the Google™ search engine provides sponsored links when a search is performed and when search tokens match advertisements campaigns of the advertisers paying for the sponsored links.

In the above examples, the "wired environment" utilizes information that is scanned by a server, which then aggregates advertisements into the html pages with the response to the end user. The model requires close coupling of application logic and ad processing and can work only with the predefined web sites. The model is not applicable to a generic mobile advertisements framework as this generic mobile advertisement framework is associated with arbitrary application servers and web sites that provide content for various device applications. Additionally, the server based model cannot work in the broadcast realm, where both content and ads are delivered using broadcast bearers.

### GENERAL

The present systems and methods may provide for mobile advertising solutions. In one embodiment, a scan engine located on a mobile device can collect information from content consuming applications and content producing applications. Scanning can be done based on preconfigured keywords and/or rules and can be based on atomic keywords or on composite mode scanning. Alternatively, scanning may be performed by a learning module. In both cases, the scanning can be utilized to compile a User Interests Profile.

A mobile advertising server may select and provide advertisements based on ad trigger alerts sent by the scan engine. Ad content providers may be registered with the mobile advertising server and in one embodiment provide the keywords and/or rules for the scan engine.

In a further embodiment, the scan engine can be located on the communication's path between an application server and an application. The scan engine may monitor traffic between the application server and the application and can scan based on a preconfigured mode or a learning mode. In one embodiment, information can be added to request headers in messages destined for an application server to allow the application server to handle advertising. In an alternative embodiment, the scan engine can communicate with a mobile advertising server to provide ad trigger alerts. The scan engine on the communication's path can be located either on the mobile device or on a proxy server.

Advertising can be provided based on whether one, both or none of the application and application server are ad aware. If an application on a mobile device is not ad aware, an ad agent can be added to the mobile device to consume advertising content. If an application server is ad aware, the application server can communicate directly with the mobile advertising server or an ad content provider to obtain advertising content. Further, an ad aware application server could insert the advertising content into the data response to facilitate the consumption of the advertising.

In a further embodiment, the application server could provide application content with metadata. Such metadata could specify parameters such as location, selection criteria, matching criteria, etc. for advertisement correlated with the application content provided. A scan engine may use these parameters to get proper the advertisement using ad trigger alerts and insert it to the content if a placeholder exists for it or if the insertion method is specified in metadata embedded in the content. Otherwise, a scan engine can finds other way to display the ad content, such as passing the ad content to an ad agent on device, displaying the ad content on the ribbon, popup, among others. In a further embodiment, the metadata could point a scan engine to a mobile advertising server or ad content provider to obtain advertising content.

In a further embodiment, a mobile device could include a storage area to pre-store advertising content. In this way, a mobile advertising server or an applications server providing content with metadata could merely forward a reference to the pre-stored content, thus saving network transmission overhead. Further, in other embodiments pre-stored content could be used by a scan engine whenever a condition for ad trigger alert is satisfied. Other uses of pre-stored content are also possible.

In a further embodiment, advertising content can be broadcast from a broadcast server. In both broadcast and non-broadcast modes, the advertising content could have metadata associated therewith and in one case, the scan engine could merely act as a comparator between rules and keywords stored on the mobile device and add metadata found in ad content in order to filter the advertising content.

In a further embodiment, the scan engine can be dynamically configured based on available ad providers. Specifically, if a new advertising provider registers with a mobile advertising server, the keywords and rules forwarded by the new ad content provider can be sent as configuration data to the scan engine. The updates to the configuration could be periodic or upon registration or deregistration of the ad content providers.

The present disclosure may therefore provide a system for facilitating targeted mobile advertisement comprising: a mobile device having: a communication subsystem; at least one application adapted to consume data, create data or consume and create data; a scan engine adapted to scan data consumed or created by the at least one application and to provide an ad trigger alert; and local storage adapted to store advertising content; and a mobile advertising server, said mobile advertising server adapted to receive ad trigger alerts from the scan engine and provide advertising content or advertising content identifiers to the mobile device.

The present disclosure may further provide a method for facilitating targeted mobile advertisement comprising the steps of: pre-storing, on a mobile device advertising content; and selecting pre-stored advertising content utilizing criteria within a scan engine on the mobile device.

The present disclosure may further provide a mobile device for facilitating targeted mobile advertisement comprising: a communication subsystem; at least one application adapted to consume data, create data or consume and create data; a scan engine adapted to scan data consumed or created by the at least one application and to provide an ad trigger alert; and local storage adapted to store advertising content.

### BRIEF DESCRIPTION OF THE DRAWINGS

The present disclosure will be better understood with reference to the drawings in which:
**Figure 1** is a block diagram showing logical components within a system for mobile advertisement;
**Figure 2** is a block diagram of a mobile advertising system in which a scan engine is located on a proxy server;
**Figure 3** is a block diagram of a mobile advertising system in which a scan engine is located on a mobile device within a communication's path;
**Figure 4** is a block diagram of a mobile advertising system in which neither an application server nor an application are ad aware;
**Figure 5** is a block diagram of a mobile advertising system in which an application on a mobile device is ad aware;
**Figure 6** is a block diagram of a mobile advertising system in which an application server is ad aware;
**Figure 7** is a block diagram of a mobile advertising system in which application content is associated with advertising metadata;
**Figure 8** is a block diagram of a mobile advertising system utilizing advertisement storage on a mobile device;
**Figure 9** is a block diagram of a mobile advertising system for broadcast advertisements;
**Figure 10** is a block diagram showing an exemplary mobile device receiving broadcast channels from a broadcast server;
**Figure 11** is a block diagram of an exemplary scan engine filtering ad content based on ad metadata within a broadcast channel; and
Figure 12 is a block diagram of an exemplary mobile device adapted to be used with the systems and methods of the present disclosure.

### DESCRIPTION OF PREFERRED EMBODIMENTS

Targeted advertising can be directed to the user of a mobile device through various means. In one embodiment this includes placing a scan engine to monitor a user's data consumption and creation on the mobile device, where the scan engine is registered with the content producing or consuming application. In further embodiments this includes placing the scan engine in the communications path between an application and an application server, such as on a mobile proxy or within the communications path on the mobile device itself. This embodiment involves the scan engine scanning the communications originating on the mobile device or targeted to the mobile device.

Each of the above embodiments is described below.

As used herein, an advertisement can be any advertisement that can be consumed by a mobile device. For example, the advertisement could be text to be displayed on a ribbon, an addition to be added to an email message, an addition to be added to an instant message, a clip to be viewed before a media clip, an audio message to be included before the listening of an audio clip, among others. The above is not meant to be limiting but is merely meant to indicate the variety of advertising that can be used.

### SCAN ENGINE ON MOBILE DEVICE

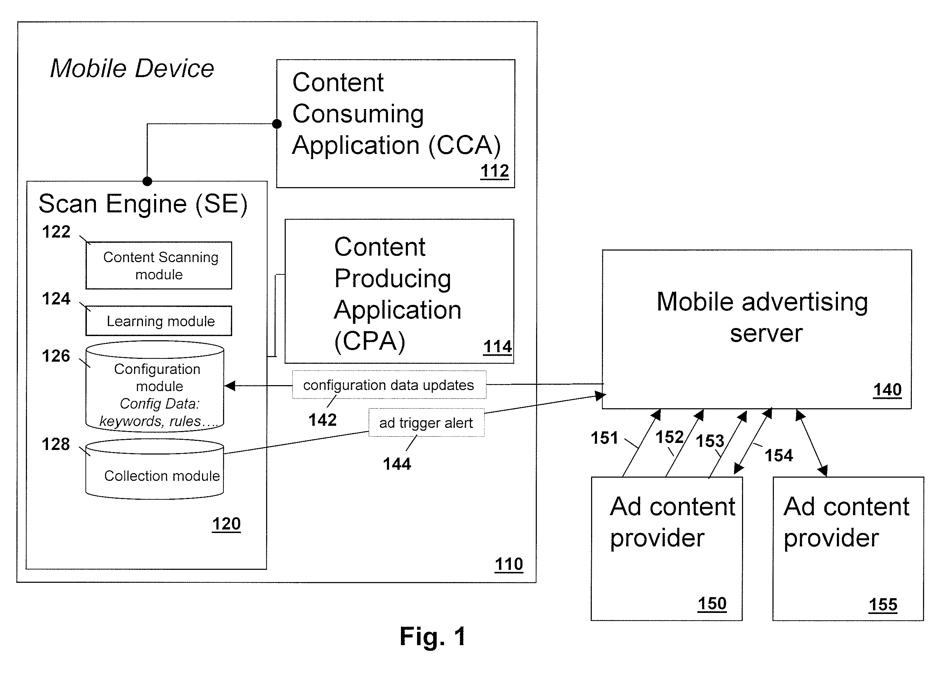

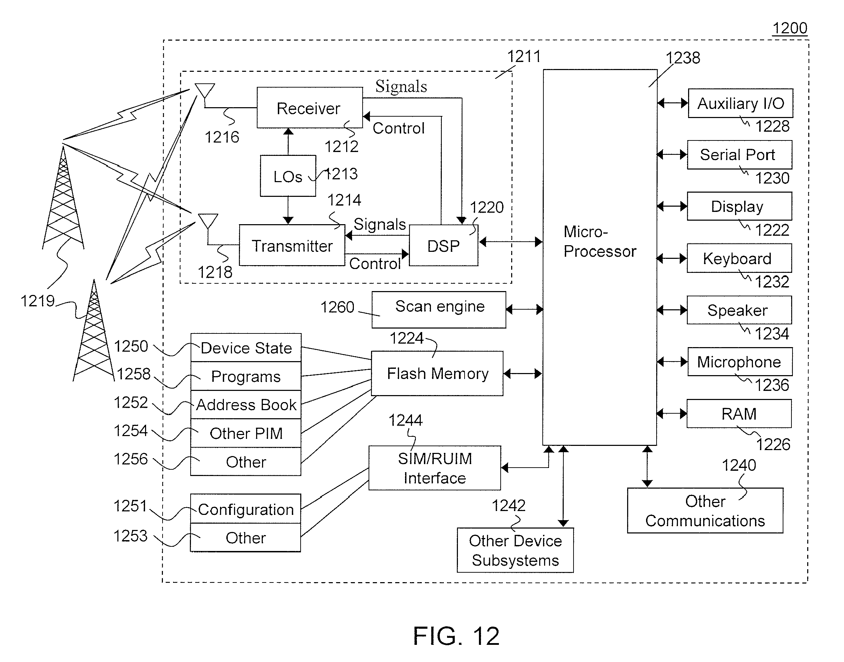

Reference is now made to **Figure 1. Figure 1** shows a block diagram illustrating logical components within a system for facilitating targeted mobile advertisement. A mobile device **110** is adapted to consume content, create content and perform other related functions, as would be known to those skilled in the art. When used herein, mobile device is a general term and can include cellular telephones, mobile data devices, pagers, laptop computers, or other devices known to those skilled in the art. An exemplary mobile device is described with reference to **Figure 12** below.

In the embodiment of **Figure 1****,** mobile device **110** includes a content consuming application **112,** a content producing application **114,** and a scan engine **120.**

Content consuming application **112** represents a logical block of an application that consumes content. Examples can include an email application which receives emails, a web browser showing web pages, an instant messaging application displaying instant messages, a video or multimedia viewer or player, among others. The above is not meant to limit content consuming application **112** to any particular content consuming application and content consuming application 112 is meant to be a general logical block.

Similarly, content producing application **114** represents an application that produces content. This can include, for example, but is not limited to, an email application on which an email can be produced, an instant messaging application on which an instant message can be created, a web browser into which information can be input, a scheduler into which data can be entered, among others. The above is not meant to limit the type of content producing application and content producing application **114** is a logical block representing any application in which content can be created.

As will be appreciated by those skilled in the art, content consuming application **112** and content producing application **114** may be the same application and the division into content consuming application **112** and content producing application **114** is merely meant to show a logical rather than a physical breakdown.

Further, in some embodiments, it is envisioned that a mobile device **110** may only have one of a content consuming application **112** or a content producing application **114,** and therefore the other of the content consuming application **112** or content producing application **114** may be omitted from the mobile device.

In the embodiment of **Figure 1****,** a scan engine **120** monitors content consuming application **112** and content producing application **114.** As will be appreciated by those skilled in the art, the scan engine can be a stand alone application or the scan engine can be a function or a logical module of a more generic ad client on mobile device **110.**

Scan engine **120** includes a content scanning module **122,** a learning module **124,** a configuration module **126** and a collection module **128** in the embodiment of **Figure 1****.** However, content scanning module **122,** learning module **124,** configuration module **126** and collection module **128** may or may not exist within scan engine **120** depending on the configuration of the scan engine **120,** as described below, and the embodiment of **Figure 1** is merely illustrative of possible logical blocks within scan engine **120.** Various options of configurations that include a subset of the above modules **122** to **128** are described herein.

Content scanning module **122** is adapted to scan content either being consumed by content consuming application **112** or being produced by content producing application **114.** As will be appreciated, the scanning engine can either be registered as a content listener with content producing applications and content consuming applications. Alternatively, the scanning engine may listen to all traffic flowing between device applications and corresponding application servers.

Scan engine **120** further comprises a learning module **124.** In accordance with the present disclosure, scanning can be performed in either a preconfigured or a learning mode.

### Preconfigured mode

In a preconfigured mode, a set of keywords or scanning rules is provided to the scan engine 120 externally. Sources of these keywords and/or scanning rules can include a device management agent or the provision of keywords or rules from an advertising server or other means.

In the preconfigured mode, when the content satisfies the predefined keywords and/or scanning rules, the scan engine issues an "ad trigger alert" message which is sent to a mobile advertisement server as described below. Examples of scanning in a preconfigured mode could include receiving keywords and either performing an atomic or composite scan. Specifically, an atomic scan is a scan for a single significant keyword. The keyword is analyzed in isolation and the results of the scan are based on the keyword in isolation. For example, if the scanning engine is scanning outgoing emails for the word "restaurant" and sees that a user has typed this word a specified number of times within a predefined number of characters, this can trigger the "ad trigger alert" message.

Conversely, a composite scan could depend on numerous keywords, each of the keywords having a specific weight. For example, if a scan engine is monitoring an email and is looking for the keyword "restaurant" it may also look for other keywords within that email message. For example, the type of restaurant may be important to advertisers. Specifically, if the user enters the keywords "restaurant" and a keyword "Chinese" this may determine the type of advertisement that is targeted to the user. In this case, the word "restaurant" may be given a weight X and the word "Chinese" may be given a weight Y and rules could be created to determine when a trigger occurs. For example, if the word "restaurant" is given a weight of 5 and the word "Chinese" is given a weight of "3" the advertisers may need a threshold of 15 before the ad can be targeted to the user. Thus, the number of times the word "restaurant" and "Chinese" appear in the email could determine whether the threshold is met.

An example of XML for a preconfigured atomic scan includes:

```
     Rule:
     if value of (weight) * (# of occurences of keyword "football") > threshold ::
     trigger an alert
     if value of (weight) * (# of occurences of keyword "football weight") >
     threshold :: trigger an alert
     if value of (weight) * (# of occurences of keyword "football ticket") >
     threshold :: trigger an alert
     Otherwise :: ignore
 
     <scan-mode type="atomic">
           ...
           <keyword-group name = "football" threshold="30" scope="10000"
     scope-unit="char">
                <keyword token = "football" weight = "3"/>
                <keyword token = "football ticket" weight = "10"/>
                <keyword token = "football game" weight = "5"/>
                ...
     <!- rules for specific keyword group ->
               <report-rules>
                     <alert type="immediate">
                          <reported-data>
                                <item name = "#keyword"/>
                                <item name = "#frequency"/>
                                <item name = "#application name"/>
                                <item name = "#application context"/>
                                <item name = "#date-time"/>
                                ...
                          </reported-data>
                          ...
                     </alert>
               </report-rules>
           </keyword-group>
           ...
     <!- default rules for keyword groups in scan-mode document ->
          <report-rules>
                <alert type="hourly">
                     <reported-data>
                                ...
                     </reported-data>
                     ...
                </alert>
          </report-rules>
     </scan-mode>
```

As will be appreciated by those skilled in the art, the above "atomic" mode scans for keywords within a specific scope. In this case, if the keyword tokens "football", "football ticket" or "football game" occur with a predetermined frequency, an alert is triggered. The above indicates that a threshold of 30 is set, requiring the occurrence of the word "football", which has a weight of 3, to occur 10 times within 10000 characters, the words "football ticket", which have a weight of 10, to occur 3 times within 10000 characters, or the words "football game", which have a weight of 5, to occur 6 times within 10000 characters.

An example of a composite mode includes:

```
     Rule:
     if value of (weight) * (# of occurences of keyword "football") + (weight * #
     of occurences of keyword 'ticket") +... < threshold :: ignore
     if value of (weight) * (# of occurences of keyword "football") + (weight * #
     of occurences of keyword 'ticket") +... > threshold :: trigger an alert
 
     <scan-mode type="composite>
           ...
           <keyword-group name = "football" threshold="50" scope="10000"
     scope-unit="char">
                <keyword token = "football" weight = "3"/>
                <keyword token = "ticket" weight = "5"/>
                <keyword token = "game" weight = "5"/>
                ...
           </keyword-group>
           ...
          <report-rules>
                <alert type="daily" schedule="1 0:00, 14:00, 20:30">
                     <reported-data>
                           <item name = "#keyword-group"/>
                           <item name = "#composite-weight"/>
                           <item name = "#application name"/>
                           <item name = "#application context"/>
                           <item name = "#date-time"/>
                           ...
                     </reported-data>
                     ...
                </alert>
          </report-rules>
 
     </scan-mode>
```

As will be appreciated by those skilled in the art, the composite mode example allows the combination of words within a predetermined number of characters or predetermined period of time. Thus, unlike the atomic mode example above, the words "football" and "ticket" do not need to occur together to increase the value of the keywords. In the example above, if the words "I would like to buy a ticket for next week's football game" were input in an email, the composite scan would detect the words ticket, football, and game and assign each a weight. Thus the weight would be 13, comprised of 1 instance of football with a weight of 3, one instance of ticket with a weight of 5, and 1 instance of game with a weight of 5. In accordance with the rules, if a threshold of 50 was met within 10000 characters, an ad trigger would occur.

In both the atomic and composite mode examples above, the times for reporting the alerts are also specified. Thus, for example, in the composite mode a report is sent at 10 am, 2 pm and 8:30 pm.

Further, in one embodiment the contents of the report are also specified. Thus, in the XML example above, the report is to include all of the parameters between the <reported-data> and </reported data> tags, including the keyword-group, composite-weight, application name, application context, and date-time. These are merely examples however, and the report can be tailored to meet the needs of the mobile advertisement server.

In a further embodiment, an alternative to preconfigured keywords consists of the scan engine using XPath expressions in the scanning rules. These XPath expressions are used to identify content match to the rule. Further embodiments could utilize the analysis of meta tags (or their equivalents) from the HTML/xHTML/SVG/etc. content returned by a browser. The meta tags could be analyzed for keyword or rule match.

A User Interests Profile could be compiled by the scan engine or mobile advertising server based on the preconfigured scan results, and could be used similarly to the User Interests Profile described below with regard to the learning mode.

### Learning Mode

In the "learning mode", when scanning the content, the scan engine "learns" significant tokens by building a frequency dictionary for words and optionally for word combinations encountered by scanned content. In the case of a learning mode, an "ad trigger alert" message could be sent to a mobile advertisement server, as described below, containing the most frequently used word and word combinations, as well as other information such as frequency or timing, among others. The frequency dictionary in this embodiment could be collected in the learning mode to allow scan engine **120** to establish a dynamic "user interests profile" with representative information on the device user's current interests.

Collected user interests profiles may enable a service provider such as a mobile operator to proactively seek and select applicable advertisement content providers on behalf of the user or group of homogeneous users.

In a further embodiment, the service provider may also utilize a "user interests profile" to offer applicable mobile content or applications to a user. In this case, the service provider operates as a content broker or contract aggregator.

In both the preconfigured and learning mode, the user interests profile may further be dynamically updated. For example, during the purchase of a car, a user may have significant usage of the keyword car. However, once the car is purchased, the use of the keyword likely will drop. Dynamically updating the user interests profile can occur based on usage of keywords and thresholds for removing keywords from the user interests profile.

A learning module may, for example, be used when there is a low coupling between the mobile advertiser server **140** and the scan engine **120** or if there are a significant number of advertisements available. As will be appreciate by those skilled in the art, if there are significant numbers of advertisements available, the keyword and rule utilization will not be efficient since it will likely overload the air with keywords to store on the devices.

Learning module 124 can be utilized to allow the user to receive advertising that is more directed to the user's interests. In an example, if a user is continuously talking about basketball in instant messaging to the exclusion of football, an advertisement directed to basketball is much more appropriate to the user. Learning module **124** can therefore provide scan engine **120** with information to produce more intelligent advertisement selections.

Learning module **124** can also use content scope or time scope as limiting factors. For example, content scope is the size of the block of characters being scanned by the scan engine. Time scope could be the number of times the user enters a word within a certain time period.

The mobile advertising server **140** or scan engine **120** could use the keywords found as significant by learning module **124** and content scope and time scope information to create the user interests profile.

In one embodiment, the user interests profile could also be augmented or edited by the user. In many cases a user will need to consent to the collection of data and the display of advertisements. This could, for example, be used to offset the cost of operating the mobile device. In this case, the user would also have an interest in viewing advertisements that are more suited to the user and the user could therefore view the profile that has been created and indicate whether certain characteristics are correct or incorrect or indicate a preference for receiving certain types of advertisements.

Scan engine **120** further includes a configuration module **126.** Configuration module contains the keywords and/or rules required for content scanning module **122.** As will be appreciated by those skilled in the art, the use of the term "keywords" in the present application is not meant to be limiting to specific words, and various other content scanning techniques besides keywords can be used including binary searches for specific binary combinations or any other searchable item. The use of "keywords" in the present disclosure encompasses these other scanning techniques and search items.

A collection module **128** is utilized to collect information that has been found by content scanning module **122** or learning module **124.** Thus, if content scanning module **122** found that certain keywords and rules have been met by content producing application **114** or content consuming application **112,** this information can be stored in collection module **128.**

Mobile device **110** interacts with a mobile advertising server **140** in the embodiment of **Figure 1****.** A mobile advertising server **140** is responsible for selecting and targeting advertisements from registered ad content providers to the appropriate devices. In one embodiment, the mobile advertising server **140** is also responsible for delivering the advertisements to mobile device **110.**

Mobile advertising server could be a dedicated server or could be part of a mobile proxy or application server.

A registered ad content provider, as illustrated by ad content providers **150** and **155** in **Figure 1****,** is an ad content provider with an established business relationship with the mobile advertising server **140.**

When a new ad content provider such as ad content provider **150** registers with a mobile advertising server **140,** it preferably provides an advertisement "manifest". This advertising manifest can also be provided to the mobile advertising server **140** dynamically when new advertisements are created for display on a mobile device **110.** Various options for the contents of the advertisement "manifest" are possible.

### Ad with keywords and rules

A first option, designated by arrow **151,** is for the ad content provider to provide mobile advertising server **140** with both advertising content as well as associated keywords and rules. In this case, a mobile advertising server **140** forwards the rules and keywords in a configuration data updates message **142** to configuration module **126,** which stores the configuration updates, allowing content scanning module **122** to scan using the new rules. Once content scanning module **122** finds that the new rules and keywords have been met, this information is provided to collection module **128,** which then issues an ad trigger alert **144** to be sent to mobile advertising server **140.** As will be appreciated by those skilled in the art, ad trigger alert **144** can be sent based on rules within the collection module **128.** For example, ad trigger alert **144** could be sent on a certain schedule, such as three times daily or only at midnight, or may be sent immediately if certain keywords and rules are met. The sending of ad trigger alert **144** is based on what is preconfigured in the scanning engine.

Mobile advertising server **140** receives ad trigger alert message **144** and, since it already has the ad based on message **151,** it provides the ad to mobile device **110** for consumption by mobile device **110.**

### Ad content only

In an alternative embodiment, ad content provider **150** provides only the ad content in message **152** to a mobile advertising server **140.** In this case, mobile advertising server **140** needs the capability to scan the ad content to create keywords and/or rules. These keywords and/or rules are then sent in configuration data updates message **142** to configuration module **126.** Content scanning module **122** utilizes these new keywords and/or rules in order to scan content being created or consumed on mobile device **110** and provides information to collection module **128.** Collection module **128** then issues and ad trigger alert **144** that is sent to mobile advertising server **140.**

Mobile advertising server **140,** upon receipt of ad trigger alert **144,** provides mobile device **110** with the ad sent in message **152** in order that mobile device **110** can consume this ad.

### Rules and/or Keywords Only

In a further embodiment, ad content provider **150** provides message **153** to mobile advertising server **140.** Message **153** contains keywords and/or rules for ads of ad content provider **150.** However, it does not contain the ad content.

Once mobile advertising server receives message **153,** it forwards this as configuration data updates message **142** to configuration module **126** on mobile device **110.**

As with the above, content scanning module **122** utilizes the new keywords and/or rules in order to scan content from either content consuming application **112** or content producing application **114** and provides the results of this to collection module **128.** Collection module **128** then issues an ad trigger alert **144** to mobile advertising server **140.**

In the case of message **153** in which only keywords and/or rules were received, mobile advertising server **140** does not have the advertising content and therefore utilizes message **154** to request ad content or just constructs or updates a user interests profile and uses it when ads are provided by the ad content provider. As will be appreciated by those skilled in the art, message **154** could include data from ad trigger alert message **144** in order to allow ad content provider to select appropriate content. However, in some cases, if ad content provider **150** only includes one advertisement, this is unnecessary and message **154** could merely include a request for ad content, as will be appreciated by those skilled in the art.

Ad content provider **150** can then provide the ad to mobile advertising server **140** which can then forward it to mobile device **110** for consumption.

### Context

In a further embodiment, ad trigger alert **144** could also provide context related information to optimize ad targeting. Such information may include, but is not limited to, device location, presence information, content consumption or creation time, among others. The context information could be derived from various applications. For example, presence information could be extracted from an instant messaging application, from an OMA Presence device client, XDMS, among others. Device location could be extracted from GPS, assisted GPS, OMA LOC device client, or other means..

The ad trigger alert **144** could, as indicated above, be sent at predefined times or upon satisfying conditions in the scanning rules. The mobile advertising server **140** could then use the context information, as well as other information within ad trigger alert **144,** to select a subset of advertisements applicable to a device user and send these to mobile device **110** for consumption by mobile device **110.**

As will be appreciate by those skilled in the art, the additional context information could help an advertising server select a subset of advertisements that are applicable. For example, if the user is using the word "restaurant" in emails, the use of GPS information could be very relevant since the user may be only interested in restaurants that are close by as opposed to restaurants in another city or another country.

The context may be also utilized to determine the choice of advertising media to use. Specifically, if the presence information indicates that a user is in a meeting, the user is unlikely to be looking at instant messaging and therefore this may be used to determine that an advertisement should not be sent by instant message. Rather, the advertisement may instead be provided within an email, for example. Alternatively, presence information could be used to temporary suspend advertisement to the device e.g. when a user is in a meeting.

In order to protect user privacy, the ad trigger alert message could be encrypted and/or user identity information could be excluded from the message data in one embodiment. The message may contain a device address that is disassociated from the user identity. Alternatively, the address information could be inserted by the underlying wireless network upon handling of the message for delivery.

### SCAN ENGINE ON MOBILE PROXY

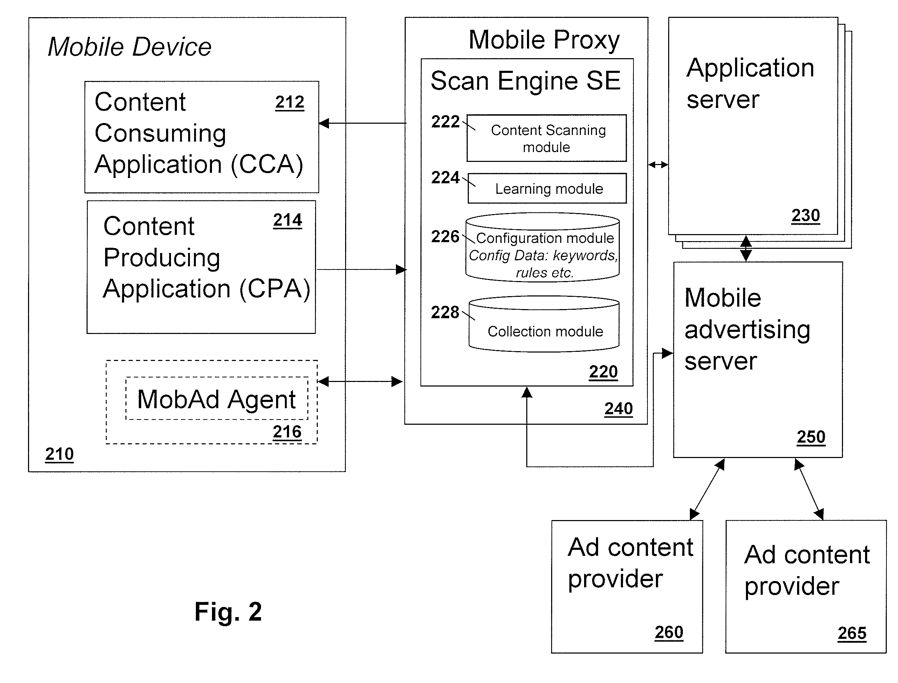

Reference is now made to **Figure 2****.** In an alternative embodiment, the scanning engine could be hosted on a mobile proxy. To facilitate content scanning, the scanning engine **220** monitors all application traffic flowing between a mobile device **210** and an application server **230** flowing through mobile proxy **240.** Scanning engine **220** collects information per user or per a group of users associated with a particular domain or application.

As with scan engine **120** from **Figure 1****,** scan engine **220** could include various modules, including content scanning module **222,** learning module **224,** configuration module **226** and collection module **228.** The functionality of these modules corresponds with the functionality of corresponding modules from **Figure 1****.** Again, as with the embodiment of **Figure 1****,** not all of these modules are required to be within scan engine **220** and the modules that are on scan engine **220** are determined by the requirements of the system.

A device **210** includes a content consuming application **212** and a content producing application **214** which interact, through mobile proxy **240,** with application server **230.**

Scan engine **220** also communicates with a mobile advertising server **250.** Mobile advertising server **250** further has ad content providers **260** and **265** registered with it.

Moving scan engine **220** to mobile proxy **240** allows the scan engine to collect information based on the traffic flowing through the proxy. Scanning can be based on both preconfigured and learning modes as described above with reference to **Figure 1****.** Information is collected by content scanning module **222** based on keywords and/or rules stored in configuration module **226,** or learning module **224** scans for various keywords or combination, and the results of the scans are stored in collection module **228.**

Collection module can provide an ad trigger to mobile advertising server **250** and mobile advertising server **250** can then provide an advertisement to be consumed by mobile device **210.** The various options for mobile advertising server **250** to obtain ad content from ad content providers **260** and **265** is the same as the options for mobile advertising server **140** to obtain ad content from ad content providers **150** and **155** from **Figure 1****.**

In the embodiment of **Figure 2****,** if mobile advertising server **250** requires context information, this could be provided by a mobile advertising agent **216** located on mobile device **210.** Mobile advertising agent **216** interacts with mobile proxy **240** and specifically with scan engine **220** in order to provide scan engine **220** with information when requested. Such information includes, but is not limited to, presence or location, among others. The scan engine **220** requests context related information from the mobile advertisement agent **216** when an ad trigger alert condition is satisfied. Alternatively, the proxy can retrieve such supplementary information from location and presence servers, if available.

### SCAN ENGINE IN COMMUNICATIONS PATH

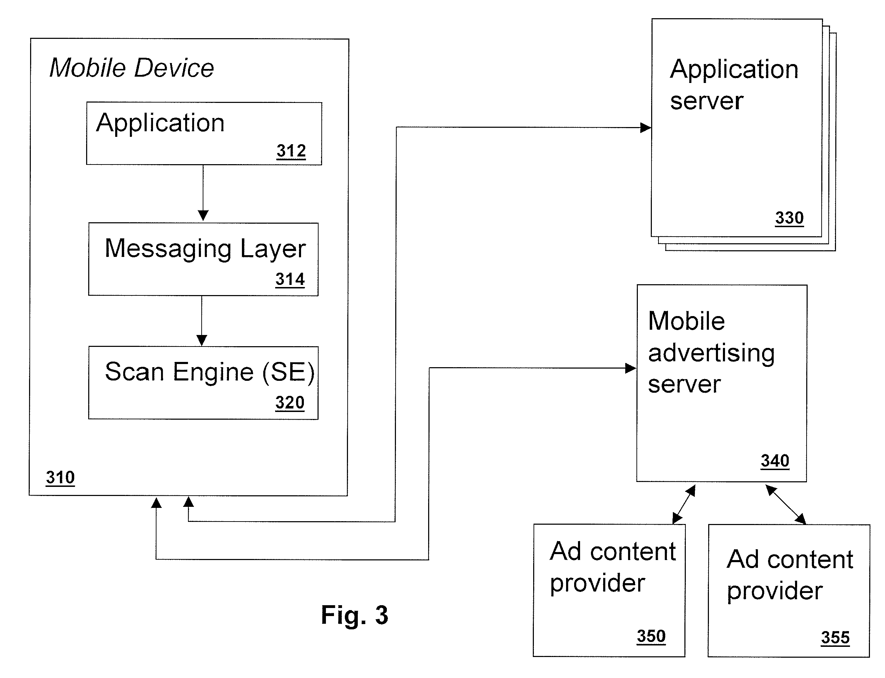

In a further alternative embodiment, the scan engine can be placed in a communication path on a mobile device rather than directly interacting with content consuming applications and content producing applications. Reference is now made to **Figure 3****.**

In **Figure 3****,** a mobile device **310** includes applications **312,** a messaging layer **314,** and a scan engine **320.** As seen in the example of **Figure 3****,** traffic flows between application **312,** through messaging layer **314** and through the scan engine **320.** Thus, in the embodiment of **Figure 3****,** the scan engine **320** is within the communications path.

The traffic then flows between mobile device **310** and either application server **330** or to mobile advertising server **340.**

Mobile advertising server **340** is associated with ad content provider **350** and ad content provider **355** and, as in **Figure 1****,** a registration process preferably exists between mobile advertising server **340** and ad content providers **350** and **355.**

The embodiment of **Figure 3** is similar to that of **Figure 2** with regard to the scan engine **320** and **220** respectively. Specifically, both scan engines **320** and **220** are within the communication path and therefore monitor traffic flowing across this communications path. Both preconfigured and learning modes are applicable and similar modules exist on scan engine **220** and scan engine **320.**

As will further be appreciated by those skilled in the art, the mobile advertisement agent to provide context could exist in the embodiment of **Figure 3****.** Alternatively, scan engine **320** could request the context information from the appropriate applications directly.

### CONSUMING ADVERTISING

Various models exist for a mobile device to consume advertising. If the application server or the application is "ad aware", then the ad aware application server or application can perform various functionality. "Ad aware", as used herein, refers to applications or application servers that are enabled for an advertising environment, and are able to perform functionality related to the insertion and consumption of advertising.

Conversely, if neither the application server nor the application is ad aware, then various other agents need to facilitate the adding of advertisements to content or the consumption of advertisements.

In one embodiment, advertising can be added in response to a request made at the mobile device. This can, for example, include appending advertisements to email messages or instant messages, ad video or audio advertisements before video or audio clips, embed advertising into a web page, among others.

In other embodiments, the advertising can be directed to a different media than the media that is making the request. For example, if the user sends an email, a ribbon on the mobile device may display advertising.

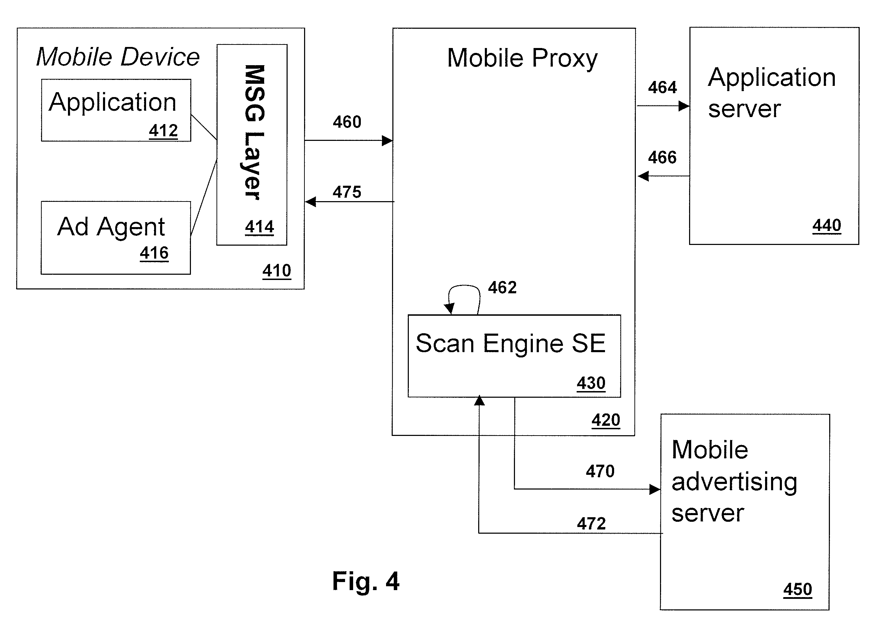

Reference is now made to **Figure 4. Figure 4** illustrates a data flow diagram in the case of a non-ad aware application and a non-ad aware application server.

A mobile data device **410** includes an application **412** and a message layer **414.** The system further includes a proxy **420,** which includes a scanning engine **430.**

The system further includes an application server **440** and a mobile advertising server **450.**

In message **460,** data device **410** sends a request from application **412,** through messaging layer **414** to proxy **420.** The request is received at proxy **420** and is scanned, as shown by arrow **462** by the scan engine **430.** The request is forwarded by proxy **420** to an application server **440** as shown by arrow **464.** Application server then responds with a response as shown by arrow **466.**

The scan engine **430,** if it detects certain keywords, can send an ad alert or scan information to the mobile advertising server **450,** as shown by arrow **470.** Mobile advertising **450** server then responds with appropriate ads, if any, as shown with arrow **472.**

The ads returned with arrow **472** and the response returned as shown with arrow 466 are combined and sent to mobile device **410,** as illustrated by arrow **475.**

At message layer **414,** the message shown by arrow **475** is broken down into the response, which is sent to application **412** and the advertisement, which is sent to an advertisement agent **416.** As will be appreciated by those skilled in the art, application **412** does not have the capabilities of handling advertisements since it is not an ad aware application and therefore advertising agent **416** is utilized to perform the correct functionality for the advertisement. In this case, advertising agent **416** could combine the advertisement with the data that was received by application **412,** could display it in an alternate media or otherwise consume the advertisement.

**Figure 4** illustrates an embodiment in which the scan engine is on a proxy. However, those skilled in the art would realize that similar methodology and data flow could apply to the embodiments of **Figures 1** and **3** equally.

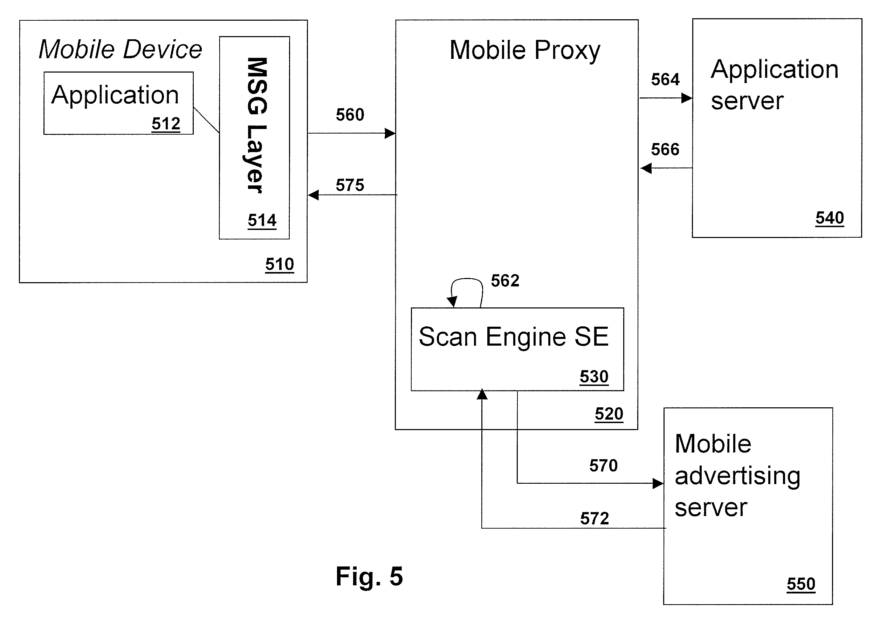

Reference is now made to **Figure 5. Figure 5** illustrates an embodiment in which an application is ad aware. The embodiment of **Figure 5** is similar to the embodiment of **Figure 4****,** with the exception that an ad agent **416** from **Figure 4** is not included in the mobile device **510** of **Figure 5****.** Specifically, since application **512** is ad aware, the message received from the proxy, which includes both the response and the ad, does not need to be broken up in the message layer **514,** but can proceed directly to application 512.

In the embodiment of **Figure 5****,** an application **512** makes a request **560** to a proxy **520.** This is then scanned as shown with arrow **562** and forwarded to the application server **540** as shown by arrow **564.** Application server **540** sends a response as shown by arrow **566** to proxy **520.**

Scan engine **530** sends an ad alert or scan information as shown by arrow **570** to the mobile advertising server **550** and mobile advertisement server **550** returns an ad, if any, as shown by arrow **572.**

Proxy **520** combines the data from the message shown in arrow **566** and the message shown by arrow **572** and returns this as a message **575.**

The message **575** is interpreted at the message layer **514** and is forwarded to application **512.**

In the embodiment of **Figure 5****,** application **512** is ad aware and therefore can deal with both the data, in response to the request that application **512** originally made, as well as the advertisement portion of the response message **575.** Preferably, the content and advertisement portions of the response message are logically separated. In one particular embodiment the advertisement portion of the response message is wrapped by predefined tags recognizable by the application **512.** In other embodiment, multipart HTTP protocol could be used to logically separate content and advertisement.

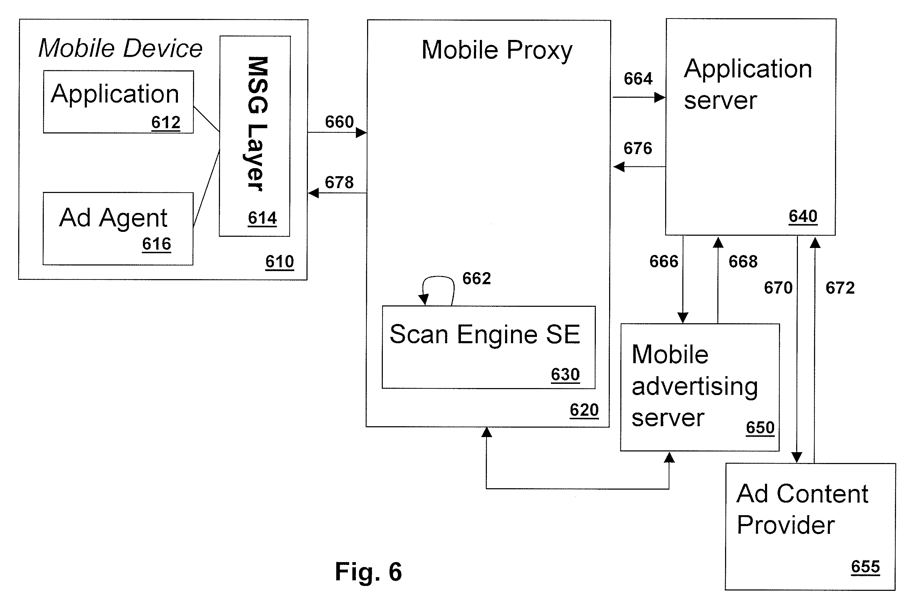

In a further embodiment, the application server could itself be ad aware. Reference is now made to **Figure 6****.**

A mobile device **610** includes at least an application **612,** a messaging layer **614** and an ad agent **616.**

A system further includes a proxy **620** including a scanning engine **630.**

The system further includes an application server **640** that is ad aware. The system further includes a mobile advertising server **650** and optionally includes an advertising content provider **655.**

In the embodiment of **Figure 6****,** an application **612** makes a request that flows through messaging layer **614** to proxy **620,** as illustrated by arrow **660.** At proxy **620,** the contents of the message sent from the application **612** are scanned, as shown by arrow **662.**

The results of the scan or the metadata implied by the results of the scan can then be added to the request before it is sent to an application server **640.** Specifically, because application server **640** is ad aware, an extra header (e.g. HTTP header) can be added to a request allowing application server **640** to process the request and to further provide advertisement enablement at application server **640.**

The request is sent from proxy **620** to application server **640,** as shown by arrow **664.**

Application server **640** processes the message and provides a request to the mobile advertising server **650,** as shown by arrow **666,** which then provides the ad as shown by arrow **668.** Alternatively, the application server can provide a request **670** directly to an ad content provider **655** and receive a response **672** providing the ad.

As will be appreciated by those skilled in the art, the request sent in arrows **666** or **670** could include a request for an advertisement or could provide information that is found with the scan shown by arrow **662.**

Once application server **640** receives response **668** or **672,** it combines this with the response from application server **640** and sends this back to proxy **620,** as shown in arrow **676.**

The proxy then forwards this message to the mobile device **610** as shown by arrow **678.**

If application server **640** combined the response and the advertisement in a way that can be handled by an application **612,** the message sent in step **678** flows through message layer **614** directly to application **612.**

Conversely, if application server **640** merely combined the response and the advertisement as a bundle and then sent the bundle back, message layer **614** breaks down the message from step **678** into the application response, which is sent to the application **612,** and the advertisement, which is sent to an advertisement agent **616.** Advertisement agent **616** can then allow the mobile device **610** to consume the content.

As will be appreciated by those skilled in the art, the embodiment of **Figure 5** can be used with the systems of **Figures 1****,** **2** or **3****.** The embodiment of **Figure 6** can be used with the embodiments of **Figures 2** and **3** since scan engine **630** is in the data flow path. If utilized with the embodiment of **Figure 3****,** the scan engine **320** would be in the data flow path but located on the mobile device. In this case, it still could insert the header information regarding the ads in order to allow an ad aware application server **640** from **Figure 6** to correctly interpret the advertisement requirement and obtain the correct advertisement from a mobile advertisement server **650** or an ad content provider **655.**

In a further alternative embodiment, the ad can also be inserted at proxy **620** in **Figure 6****.** Specifically, if the message represented by arrow **676** includes an ad and a response bundled together, proxy **620** can then utilize its own processing capabilities to combine these into a response that application **612** can handle.

As will further be appreciate, the extra header information that is inserted by the scan engine in **Figure 6** could include, for example, the URL of the mobile advertisement server, the URL of the mobile proxy, or an ad identifier, among others.

In a further embodiment, the mobile advertising server can use a mobile proxy URL, if provided, to contact the scan engine **630.** Scan engine **630** could then provide the appropriate information such as a list of matched keywords and the mobile advertisement server selects ads applicable to information from the scan engine **630** and returns these ads to the scan engine 630 or to the application server 640. This is, however, merely an example of one architecture and others would be apparent to those skilled in the art with reference to this disclosure.

### TARGETED MOBILE ADVERTISEMENT USING METADATA EMBEDDED IN APPLICATION CONTENT

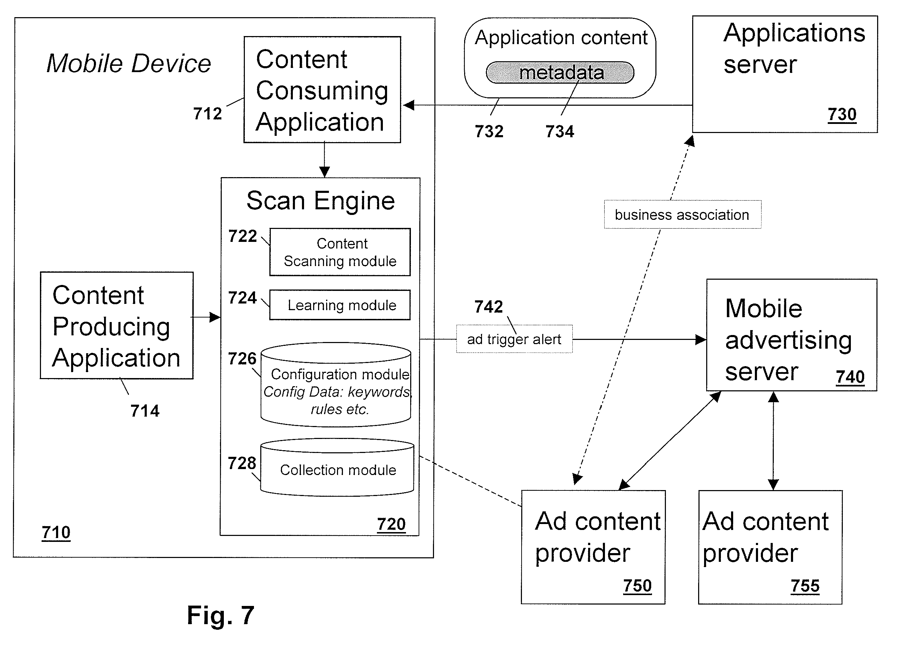

In a further embodiment, application content coming from an application server can include metadata embedded therein. Reference is now made to **Figure 7****.** In the embodiment of **Figure 7****,** a mobile device **710** includes a content consuming application **712** and a content producing application **714.** It further includes a scan engine **720** comprising various modules, which may or may not be included in scan engine **720.** These modules include content scanning module **722,** learning module **724,** configuration module **726** and collection module **728.** These modules interact in a similar manner to the corresponding modules of **Figure 1****.**

In the embodiment of **Figure 7**, application server **730** has a predefined business relationship with an ad content provider **750.** Further, the scan engine **720** includes a relationship with a mobile advertising server **740,** which also interacts with ad content provider **750** and ad content provider **755.**

When providing content from applications server **730,** application content 732 includes metadata **734** embedded therein. The metadata associated with the advertisement comprises a set of tokens, keywords, among others, to embed in the appropriate content and this metadata is provided from ad content provider **750.** Alternatively, the metadata could come from the application server itself and could be used by the mobile advertising server, if forwarded by the scan engine, to select an appropriate advertisement. This is similar to the embodiment of Figure 1, but in this case the scan engine merely forwards the metadata to the mobile application server and does not perform keyword matching or learning.

In a further alternative embodiment, the application server may just embed the URL of the ad content provider, or the URL of an advertisement in an ad content provider's domain, in the content associated with the advertisement domain of the ad content provider **750.** In the case of a URL of an advertisement, the ad content provider could maintain the URL for an appropriate ad overwriting an older one with the new version. Further, a page redirector forwarding to an appropriate ad could be used.

In one embodiment, application server **730** also formats content in order to have a place holder for an advertisement.

As will be appreciated by those skilled in the art, by having an association between the content and ads through metadata embedded in the content, static content can have dynamic advertising associated therewith. For example, content can have the latest advertisement on a specific type of mobile device by utilizing metadata to go and retrieve this ad. Otherwise, an application provider such as application server **730** would need to manually insert a new ad every time the new ad became available.

When application content **732** with metadata **734** is passed to mobile device **710,** scan engine **720** scans the content and detects the ad relevant information metadata. Upon this event, the scan engine **720** sends an ad trigger alert message **742** to mobile advertising server **740** providing the metadata and possibly associated contextual information. The mobile advertising server **740** contacts the appropriate ad content provider **750** and directs the appropriate ad to be forwarded to the device.

In an alternative embodiment, in the case where the ad content provider URL is provided in metadata, the scan engine **720** could directly contact the ad content provider **750,** bypassing the mobile advertising server **740.**

When application server **730** inserts metadata **734** into application content **732,** scan engine **720** retrieves this metadata and provides an ad trigger alert to mobile advertising server **740.** However, as will be appreciated by those skilled in the art, this may create a conflict in terms of the advertising that can be placed on the mobile device. Specifically, the application provider may have a different interest than the mobile service provider with regard to the advertising that is placed on the mobile device. For example, if an application provider is a provider for streaming football video, this application provider may only allow football advertising. Conversely, a mobile service provider will have registered this application as a sports application along with various other sports applications. The application provider and the mobile service provider will have different interests when targeting the end user. If metadata is attributed both by the ad content provider, the mobile advertising service **740** and the application provider, the scan engine **720** could use a "priority indicator" to match an ad when scanning content and receiving application metadata. If the content priority indicator is set to low within the application metadata, the scan engine can report this in its usual alerts. If the priority indicator is set to high, within the application metadata, the scan engine may have to modify its alert to the mobile advertising server.

Thus, the concept of priority can be introduced into metadata to indicate which advertising should be given priority. In the example of the football provider, since the user is using a football application, the priority should likely be given to the football advertising rather than sports advertising in general since the user may have no interest in sports advertising that is directed to sports besides football.

### PRELOADED AD CONTENT

In a further embodiment, ads may be preloaded on the device by a service provider such as a mobile operator. Optionally, these ads may contain embedded metadata that indicates to the scan engine or mobile agent how to insert them into an application content to be consumed by user.

In a further alternative, the application content received by the device contains metadata indicating to a scan engine what preloaded ad needs to be presented to the user with the content. The metadata could facilitate the device to embed the ad inside the content for optimal user experience. In particular, the metadata in the application content could be a URI or URI pattern of the preloaded ad.

As will be appreciated by those skilled in the art, the content in the above example is ad aware and when content is received, the scan engine can utilize the metadata within the content to insert the advertisement.

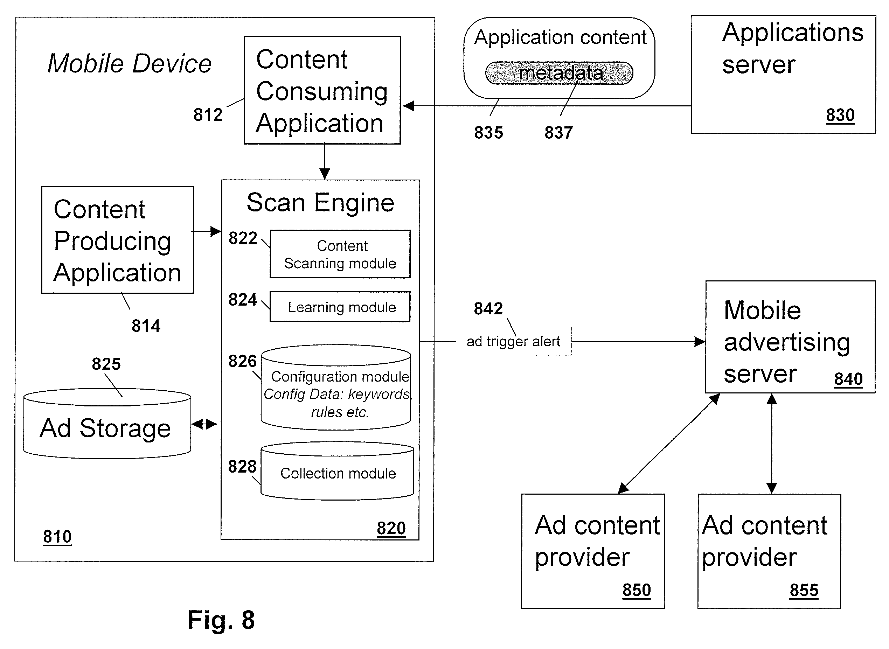

Reference is now made to **Figure 8. Figure 8** illustrates a mobile device **810** containing content consuming applications **812** and content producing applications **814.** Mobile device **810** further includes a scan engine **820,** possibly having a content scanning module **822,** a learning module **824,** a configuration module **826** and a collection module **828.** Mobile device **810** further includes a storage area **825** to store advertisements on mobile device **810.** Alternatively, storage area **825** may be external to the device.

In operation, application server **830** provides content **835** to mobile device **810.** Content **835** optionally includes metadata **837** if the content is ad aware content.

If the content includes metadata **837,** scan engine **820** strips metadata **837** and utilizes the metadata to find an ad that has been pre-stored in storage **825** to insert into content **835.** In one embodiment, content **835** includes a place for the ad to be inserted into the content.

Scan engine **820** further interacts with a mobile advertising server **840** to provide the ad triggers **842** as described above with reference to **Figures 1** to **3****.**

Mobile advertisement server **840** has ad content providers **850** and **855** associated therewith.

As will be appreciated by those skilled in the art, ads could be preloaded on to mobile device **810** utilizing mobile advertising server **840** when conditions for the downloading are optimized. For example, when the device is in a "low cost" network such as a WiFi hot spot, Wi Max, when the device is USB connected, when the data is preloaded on SIM or removable storage media, when the time of day provides lower charges, among other optimized downloading.

Scan engine **820** scans the content consumed by content consuming application **812** or content produced by content producing application **814.** As will further be appreciated by those skilled in the art, scan engine **820** may only listen to a subset of content available either in content consuming application **812** or content producing application **814.** For example, if the scan engine **820** is only interested in email programs, it can only listen to content consuming applications and content producing applications et cetera associated with email.

Preloaded ads in storage **825** could also include "default ads" that are displayed when no appropriate metadata is detected in the content. Thus, if content **835** is not ad aware content, scan engine **820** could still use an ad that is pre-stored in storage **825** merely choosing a default ad. As will be appreciated, the default ad is still directed to the consumer since the default ads stored in storage **825** are uploaded based on the mobile advertising server **840** and the user profile created and forwarded in the ad triggers sent from scan engine **820.**

Alternatively, default preloaded ads can be used even if there is metadata when the mobile advertising server cannot identify any ads that match an ad trigger alert 842 message issued by the scan engine.

When the scan engine **820** is operating in a learning mode, as described above, the mobile advertisement server **840** could dynamically update a set of preloaded ads to match the user interests profile as described above based on the information presented by the scan engine and as a result of the learning mode data collection.

Preloading ads also allows a scanning mode of operations as described above, where in response to an ad trigger alert **842** from the scan engine **820,** the mobile advertising server **840** will only need to provide an identifier of a preloaded ad already on the device. As will be appreciated, this saves both network bandwidth and battery life of the mobile device, since the ads are already preloaded on to the device and thus do not need to be transmitted over the air.

Again, rules could be implemented if more than one mechanism is available to provide which ad should be displayed on mobile device **810.** In this case, priority as assigned by the service provider could be utilized in order to display the ad that the service provider prefers.

As will be appreciated by those skilled in the art, the pre-storage of advertisements can also be utilized with the embodiments of **Figures 1** to **8** above. For the above embodiments, the scan engine may even assume some of the functionality of the mobile advertising server and match pre-loaded advertisements to the collected results such as preconfigured or learned keywords, or matching pre-loaded advertisements to metadata embedded in the content, if applicable.

### BROADCAST BASED MOBILE ADVERTISEMENT

In a broadcast environment, advertisements delivered over a broadcast may be augmented with metadata. Such metadata may contain keywords, pattern matching rules, or other information to facilitate ad selection.

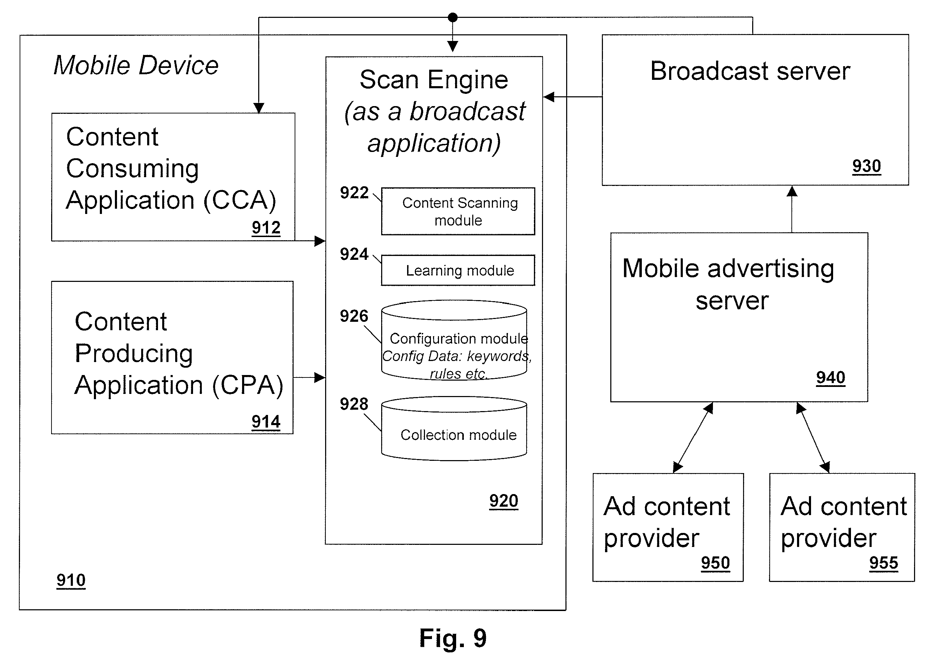

Reference is now made to **Figure 9. Figure 9** shows a mobile device **910** including content consuming application **912** and content producing application **914.**

A scan engine **920** is utilized in a broadcast application and contains content scanning module **922,** learning module **924,** configuration module **926** and collection module **928.** These modules are similar to those described above with reference to **Figure 1****.**

A broadcast server **930** broadcasts to a mobile device and in a preferred embodiment, the broadcast channels can be monitored by scan engine **920.**

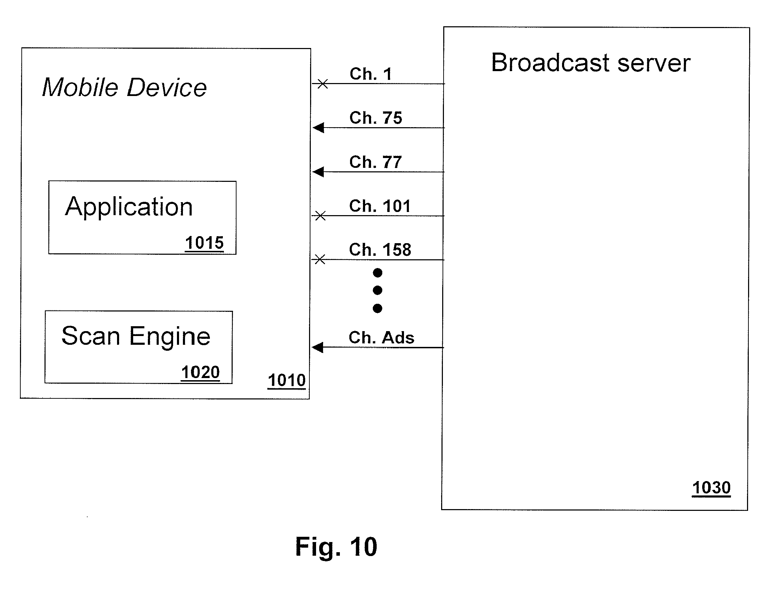

Reference is now made to **Figure 10. Figure 10** shows an exemplary embodiment in which a broadcast server **1030** broadcasts various channels to a mobile device **1010.** As will be seen from the example of **Figure 10**, mobile device **1010** is subscribed to channels 75 and 77 and is not subscribed to channels 1, 101 and 158. Further, the device receives a dedicated advertisement channel that includes advertisements broadcast to the mobile device.

In the embodiment of **Figure 10****,** mobile device **1010** sends the channel content of the subscribed channels to an application **1015,** while keywords and ad related rules are sent to scan engine **1020.**

Referring again to **Figure 9****,** a mobile advertising server **940** communicates with broadcast server **930** in order to provide advertisements to the broadcast server to transmit over the ad broadcast channel. Ad content provider **950** and ad content provider **955** are registered with mobile advertising server **940** and can provide the ads, along with keywords and/or rules in order to facilitate the selection of ads by scan engine **920.**

As with the examples of **Figures 1** to **8** above, the scan engine **920** can use information collected during content scanning to filter the appropriate ads based on keyword matching. Both the preconfigured and learning modes are applicable here. The preconfigured mode could be enabled by using a broadcast to provide keyword updates and could be as a result of an ad content provider registration or deregistration. In a further embodiment, the preconfigured mode may not be overwritten by updates.

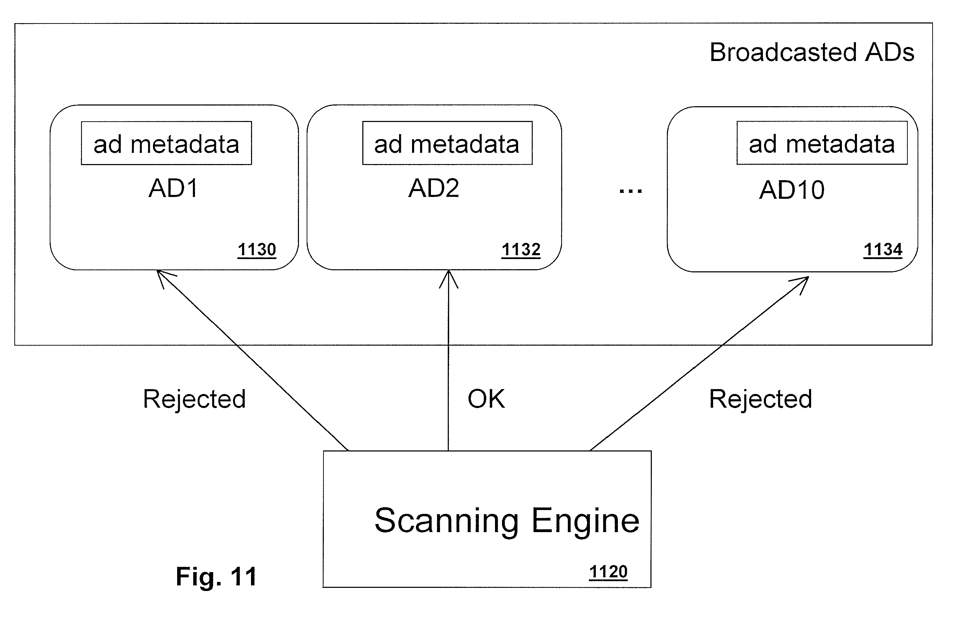

In a further embodiment, ads can include metadata embedded therein. This leads to the simplified case where the scan engine is reduced to matching metadata of broadcast ads or pre-stored ads with preconfigured scan engine metadata or data collected during content scanning could be utilized. Reference is now made to **Figure 11. Figure 11** shows a scan engine **1120** on a device (not shown), where a broadcast channel is broadcasting ads. The metadata embedded in the broadcasted ads can be compared with preconfigured metadata in the scan engine **1120** and, if the parameters or rules match, the SE can accept the ad. In a further embodiment, ads can be matched with data collected while scanning the content produced or consumed, through a subscription, by a user. In the example of **Figure 11****,** ad **1130** does not match the metadata in scan engine **1120** and is therefore rejected.

Conversely, the ad metadata in ad **1132** matches the metadata within scan engine **1120** and the ad is therefore accepted. Further, the ad metadata in ad **1134** does not match the metadata in scan engine **1120** and is therefore rejected.

In this way, scan engine **1120** is merely a comparer and selects ads based on preconfigured data. Further, no scanning needs to be performed in this particular case. Also, the scan engine preconfigured metadata could be dynamically updated, for example using a broadcast bearer.

As will be appreciated by those skilled in the art, the matching in **Figure 11** can also be used in non-broadcast modes, such as the embodiments of **Figures 1** to **8** above.

Metadata associated with ads could also be used by the mobile advertising server **940** of **Figure 9** for directing ads containing metadata to the appropriate users based on data collected by scan engines on devices. This information is reported to the mobile advertisement server **940** in ad trigger alert messages.

As will be appreciated by those skilled in the art, this model is more dynamic than the one described above since the mobile advertisement server associates a user with an ad when the actual ad is available from the ad content provider as opposed to an association based on configuration information provided by the ad content provider at registration. The approach of the mobile advertising server associating ads with the appropriate users based on metadata embedded in the ads could work for point to point and mutli-cast bearers and is ideally suited for operating upon data collected by the scan engines functioning in the "learning mode" or "preconfigured mode".

### DYNAMIC CONFIGURATION OF SCANNING ENGINES

In a further embodiment, when an ad content provider registers with the mobile advertisement server as in **Figure 1****,** it provides a set or applicable keywords and rules for the ad content to be offered by the ad content provider. The scan engine provides configuration interface for over the air updates by the mobile advertisement server.

The mobile advertisement server updates the scan engine on the devices with the appropriate changes and the configuration data. These updates could be periodic, for example, scheduled, or upon registration and deregistration of the ad content providers.

As will be appreciated by those skilled in the art, the above is applicable for both scan engines located on mobile devices and scan engines that are located on a proxy as in **Figure 2****.**

One exemplary mobile device is described below with reference to **Figure 12****.** This is not meant to be limiting, but is provided for illustrative purposes.

**Figure 12** is a block diagram illustrating a mobile station apt to be used with preferred embodiments of the apparatus and method of the present application. Mobile station **1200** is preferably a two-way wireless communication device having at least voice and data communication capabilities. Mobile station **1200** preferably has the capability to communicate with other computer systems on the Internet. Depending on the exact functionality provided, the wireless device may be referred to as a data messaging device, a two-way pager, a wireless e-mail device, a cellular telephone with data messaging capabilities, a wireless Internet appliance, or a data communication device, as examples.

Where mobile station **1200** is enabled for two-way communication, it will incorporate a communication subsystem **1211,** including both a receiver **1212** and a transmitter **1214,** as well as associated components such as one or more, preferably embedded or internal, antenna elements **1216** and **1218,** local oscillators (LOs) **1213,** and a processing module such as a digital signal processor (DSP) **1220.** As will be apparent to those skilled in the field of communications, the particular design of the communication subsystem **1211** will be dependent upon the communication network in which the device is intended to operate.

Network access requirements will also vary depending upon the type of network **1219.** In some CDMA networks network access is associated with a subscriber or user of mobile station **1200.** A CDMA mobile station may require a removable user identity module (RUIM) or a subscriber identity module (SIM) card in order to operate on a CDMA network.. The SIM/RUIM interface **1244** is normally similar to a card-slot into which a SIM/RUIM card can be inserted and ejected like a diskette or PCMCIA card. The SIM/RUIM card can have approximately 64K of memory and hold many key configuration **1251,** and other information **1253** such as identification, and subscriber related information.

When required network registration or activation procedures have been completed, mobile station **1200** may send and receive communication signals over the network **1219.** As illustrated in **Figure 12****,** network **1219** can consist of multiple base stations communicating with the mobile device. For example, in a hybrid CDMA 1x EVDO system, a CDMA base station and an EVDO base station communicate with the mobile station and the mobile station is connected to both simultaneously. The EVDO and CDMA 1x base stations use different paging slots to communicate with the mobile device.

Signals received by antenna **1216** through communication network **1219** are input to receiver **1212,** which may perform such common receiver functions as signal amplification, frequency down conversion, filtering, channel selection and the like, and in the example system shown in **Figure 12****,** analog to digital (A/D) conversion. A/D conversion of a received signal allows more complex communication functions such as demodulation and decoding to be performed in the DSP **1220.** In a similar manner, signals to be transmitted are processed, including modulation and encoding for example, by DSP **1220** and input to transmitter **1214** for digital to analog conversion, frequency up conversion, filtering, amplification and transmission over the communication network **1219** via antenna **1218.** DSP **1220** not only processes communication signals, but also provides for receiver and transmitter control. For example, the gains applied to communication signals in receiver **1212** and transmitter **1214** may be adaptively controlled through automatic gain control algorithms implemented in DSP **1220.**

Mobile station **1200** preferably includes a microprocessor **1238** which controls the overall operation of the device. Communication functions, including at least data and voice communications, are performed through communication subsystem **1211.** Microprocessor **1238** also interacts with further device subsystems such as the display **1222,** flash memory **1224,** random access memory (RAM) **1226,** auxiliary input/output (I/O) subsystems **1228,** serial port **1230,** one or more keyboards or keypads **1232,** speaker **1234,** microphone **1236,** other communication subsystem **1240** such as a short-range communications subsystem and any other device subsystems generally designated as **1242.** Serial port **1230** could include a USB port or other port known to those in the art.

Some of the subsystems shown in **Figure 12** perform communication-related functions, whereas other subsystems may provide "resident" or on-device functions. Notably, some subsystems, such as keyboard **1232** and display **1222,** for example, may be used for both communication-related functions, such as entering a text message for transmission over a communication network, and device-resident functions such as a calculator or task list.

Operating system software used by the microprocessor **1238** is preferably stored in a persistent store such as flash memory **1224,** which may instead be a read-only memory (ROM) or similar storage element (not shown). Those skilled in the art will appreciate that the operating system, specific device applications, or parts thereof, may be temporarily loaded into a volatile memory such as RAM **1226.** Received communication signals may also be stored in RAM **1226.**

As shown, flash memory **1224** can be segregated into different areas for both computer programs **1258** and program data storage **1250, 1252, 1254** and **1256.** These different storage types indicate that each program can allocate a portion of flash memory **1224** for their own data storage requirements. Microprocessor **1238,** in addition to its operating system functions, preferably enables execution of software applications on the mobile station. A predetermined set of applications that control basic operations, including at least data and voice communication applications for example, will normally be installed on mobile station **1200** during manufacturing. Other applications could be installed subsequently or dynamically.

A preferred software application may be a personal information manager (PIM) application having the ability to organize and manage data items relating to the user of the mobile station such as, but not limited to, e-mail, calendar events, voice mails, appointments, and task items. Naturally, one or more memory stores would be available on the mobile station to facilitate storage of PIM data items. Such PIM application would preferably have the ability to send and receive data items, via the wireless network **1219.** In a preferred embodiment, the PIM data items are seamlessly integrated, synchronized and updated, via the wireless network **1219,** with the mobile station user's corresponding data items stored or associated with a host computer system. Further applications may also be loaded onto the mobile station **1200** through the network **1219,** an auxiliary I/O subsystem **1228,** serial port **1230,** short-range communications subsystem **1240** or any other suitable subsystem **1242,** and installed by a user in the RAM **1226** or preferably a non-volatile store (not shown) for execution by the microprocessor **1238.** Such flexibility in application installation increases the functionality of the device and may provide enhanced on-device functions, communication-related functions, or both. For example, secure communication applications may enable electronic commerce functions and other such financial transactions to be performed using the mobile station **1200.**

In a data communication mode, a received signal such as a text message or web page download will be processed by the communication subsystem **1211** and input to the microprocessor **1238,** which preferably further processes the received signal for output to the display **1222,** or alternatively to an auxiliary I/O device **1228.**

A user of mobile station **1200** may also compose data items such as email messages for example, using the keyboard **1232,** which is preferably a complete alphanumeric keyboard or telephone-type keypad, in conjunction with the display **1222** and possibly an auxiliary I/O device **1228.** Such composed items may then be transmitted over a communication network through the communication subsystem **1211.**

A scan engine **1260,** which could be equivalent to scan engines **120, 320, 720, 820, 920, 1020** and **1120,** could scan the inputs and outputs from mobile device **1200.**

For voice communications, overall operation of mobile station **1200** is similar, except that received signals would preferably be output to a speaker **1234** and signals for transmission would be generated by a microphone **1236.** Alternative voice or audio I/O subsystems, such as a voice message recording subsystem, may also be implemented on mobile station **1200.** Although voice or audio signal output is preferably accomplished primarily through the speaker **1234,** display **1222** may also be used to provide an indication of the identity of a calling party, the duration of a voice call, or other voice call related information for example.

Serial port **1230** in **Figure 12****,** would normally be implemented in a personal digital assistant (PDA)-type mobile station for which synchronization with a user's desktop computer (not shown) may be desirable, but is an optional device component. Such a port **1230** would enable a user to set preferences through an external device or software application and would extend the capabilities of mobile station 1200 by providing for information or software downloads to mobile station **1200** other than through a wireless communication network. The alternate download path may for example be used to load an encryption key onto the device through a direct and thus reliable and trusted connection to thereby enable secure device communication. As will be appreciated by those skilled in the art, serial port **1230** can further be used to connect the mobile device to a computer to act as a modem.

Other communications subsystems **1240,** such as a short-range communications subsystem, is a further optional component which may provide for communication between mobile station **1200** and different systems or devices, which need not necessarily be similar devices. For example, the subsystem **1240** may include an infrared device and associated circuits and components or a Bluetooth™ communication module to provide for communication with similarly enabled systems and devices.

The embodiments described herein are examples of structures, systems or methods having elements corresponding to elements of the techniques of this application. This written description may enable those skilled in the art to make and use embodiments having alternative elements that likewise correspond to the elements of the techniques of this application. The intended scope of the techniques of this application thus includes other structures, systems or methods that do not differ from the techniques of this application as described herein, and further includes other structures, systems or methods with insubstantial differences from the techniques of this application as described herein.

## Claims

1. A system for facilitating targeted mobile advertisement comprising:
a mobile device having:
a communication subsystem;
at least one application adapted to consume data and/or create data;
a scan engine adapted to scan data consumed and/or created by the at least one application and to provide an ad trigger alert; and
local storage adapted to store advertising content; and
a mobile advertising server, said mobile advertising server adapted to receive ad trigger alerts from the scan engine and provide advertising content or advertising content identifiers to the mobile device.

2. The system of claim 1, further comprising a broadcast server.

3. The system of claim 2, wherein the scan engine is adapted to filter advertising content received over a broadcast channel from the broadcast server.

4. The system of claim 3, wherein the scan engine is further adapted to store filtered advertising content in the local storage.

5. The system of claim 3 or claim 4, wherein parameters for filtering are received over a broadcast channel.

6. The system of any one of claims 1 to 5, wherein the scan engine comprises a content scanning module, said content scanning module adapted to scan content consumed and/or created by the at least one application utilizing keywords and/or rules.

7. The system of claim 6, wherein the scan engine further comprises a configuration module to store keywords and/or rules.

8. The system of claim 7, wherein the configuration module is dynamically configurable.

9. The system of any one of claims 6 to 8, wherein the scan engine further comprises a collection module to store the results from the content scanning module.

10. The system of claim 9, wherein the collection module is adapted to create an ad trigger alert that is sent to the mobile advertising server.

11. The system of claim 10, wherein the ad trigger alert message further comprises contextual information about the mobile device.

12. The system of any one of claims 6 to 11, wherein the scan engine further comprises a learning module, the learning module being adapted to compile a list of keywords being consumed or created by the at least one application.

13. The system of claim 12, wherein the learning module is further adapted to utilize content scope and/or time scope to compile the list of keywords.

14. The system of any one of claims 6 to 13, wherein the scan engine is further adapted to create a user interests profile.

15. The system of claim 14, wherein the scan engine is adapted to select advertising content from the local storage based on user interests profile.

16. The system of claim 10, wherein the scan engine is adapted to select advertising content from the local storage based on the ad trigger alert.

17. The system of claim 12, wherein the scan engine is adapted to select advertising content from the local storage based on the compiled keywords.

18. The system of claim 10, wherein the mobile advertising server is adapted to provide the mobile device with an advertising identifier based on the ad trigger alert, the advertising identifier identifying advertising content stored within said local storage.

19. The system of claim 18, wherein the local storage is external to the device.

20. The system of any one of claims 1 to 19, wherein advertising content is preloaded or updated on the mobile device when the device is in a low cost network.

21. The system of claim 20, wherein the low cost network is a Wireless Fidelity 'WiFi' hotspot, a Worldwide Interoperability for Microwave Access 'WiMax' network, the mobile device is Universal Serial Bus 'USB'-connected or the advertising content is Subscriber Identity Module 'SIM'-preloaded.

22. The system of any one of claims 1 to 21, wherein the advertising storage further comprises default advertising content adapted to be utilized by the scan engine if no advertising content selection can be made.

23. The system of claim 14, wherein the mobile advertising server is adapted to utilize the user interests profile to dynamically update preloaded ads in the local storage on the mobile device.

24. A method for facilitating targeted mobile advertisement comprising the steps of:
pre-storing, on a mobile device advertising content; and
selecting pre-stored advertising content utilizing criteria within a scan engine on the mobile device.

25. The method of claim 24, wherein the pre-storing step is performed when the mobile device is connected to a low cost network.

26. The method of claim 25, wherein the low cost network is a WiFi hotspot, a WiMax network, the mobile device is USB-connected or the advertising content is SIM-preloaded.

27. The method of any one of claims 24 to 26, wherein the selecting step compares predefined parameters with metadata embedded in the advertising content.

28. The method of claim 27, wherein the predefined parameters are received from a mobile advertising server or over a broadcast channel.

29. The method of any one of claims 24 to 26, wherein the selecting step compares parameters derived on the mobile device with the advertising content.

30. The method of claim 29, wherein the parameters derived on the mobile device are created based on the results of the scan engine when scanning content consumed by or created by the mobile device.

31. The method of claim 30, wherein the scanning utilizes keywords and/or rules to scan the content consumed by or created by the mobile device.

32. The method of claim 29, wherein the scanning is utilized to create a list of keywords consumed by or created by the mobile device.

33. The method of claim 32, wherein the list of keywords is utilized to create a user interests profile.

34. The method of claim 33, wherein advertising content in the local storage is dynamically updated based on the user interests profile.

35. The method of any one of claims 23 to 32 further comprising the step of inserting a default ad when the selecting step cannot select advertising content.

36. A mobile device for facilitating targeted mobile advertisement comprising:
a communication subsystem;
at least one application adapted to consume data and/or create data;
a scan engine adapted to scan data consumed and/or created by the at least one application and to provide an ad trigger alert; and
local storage adapted to store advertising content.

37. The mobile device of claim 36, wherein the scan engine is adapted to filter advertising content received over a broadcast channel from a broadcast server and to store filtered advertising content in the advertising storage.

38. The mobile device of claim 36, wherein parameters for filtering are received over a broadcast channel.

39. The mobile device of any one of claims 36 to 38, wherein the scan engine comprises a content scanning module, said content scanning module adapted to scan content consumed and/or created by the at least one application utilizing keywords and/or rules.

40. The mobile device of claim 39, wherein the scan engine further comprises a configuration module to store keywords and/or rules.

41. The mobile device of claim 40, wherein the configuration module is dynamically configurable.

42. The mobile device of any one of claims 39 to 41, wherein the scan engine further comprises a collection module to store the results from the content scanning module.

43. The mobile device of claim 42, wherein the collection module is adapted to create an ad trigger alert that is sent to a mobile advertising server.

44. The mobile device of claim 43, wherein the ad trigger alert further comprises contextual information about the mobile device.

45. The mobile device of any one of claims 39 to 44, wherein the scan engine further comprises a learning module, the learning module being adapted to compile a list of keywords being consumed or created by the at least one application.

46. The mobile device of claim 45, wherein the learning module is further adapted to utilize content scope and/or time scope to compile the list of keywords.

47. The mobile device of any one of claims 39 to 46, wherein the scan engine is further adapted to create a user interests profile.

48. The mobile device of claim 47, wherein the scan engine is adapted to select advertising content from the local storage based on user interests profile.

49. The mobile device of claim 43, wherein the scan engine is adapted to select advertising content from the local storage based on the ad trigger alert.

50. The mobile device of claim 45, wherein the scan engine is adapted to select advertising content from the local storage based on the compiled keywords.

51. The mobile device of any one of claims 36 to 50, wherein advertising content is preloaded or updated on the mobile device when the device is in a low cost network.

52. The mobile device of claim 51, wherein the low cost network is a WiFi hotspot, a WiMax network, the mobile device is USB-connected or the advertising content is SIM-preloaded.

53. The mobile device of any one of claims 36 to 52, wherein the local storage further comprises default advertising content adapted to be utilized by the scan engine if no advertising content selection can be made.

54. The mobile device of claim 53, wherein the mobile advertising server is adapted to utilize the user interests profile to dynamically update preloaded ads in the local storage on the mobile device.

55. A computer readable medium storing computer readable instructions executable by a processor of a computing device to cause said device to implement the steps of the method of any one of claims 24 to 35.
